(19) Europäisches Patentamt
European Patent Office
Office européen des brevets

(11) **EP 4 730 424 A1**

(12) **EUROPEAN PATENT APPLICATION**
published in accordance with Art. 153(4) EPC

(43) Date of publication:
**22.04.2026 Bulletin 2026/17**

(21) Application number: **24891047.3**

(22) Date of filing: **23.08.2024**

(51) International Patent Classification (IPC):
*H01M 4/137* (2010.01)   *H01M 4/1397* (2010.01)
*H01M 4/587* (2010.01)   *H01M 4/62* (2006.01)

(52) Cooperative Patent Classification (CPC):
H01M 4/137; H01M 4/1397; H01M 4/1399;
H01M 4/36; H01M 4/587; H01M 4/60; H01M 4/62;
Y02E 60/10

(86) International application number:
**PCT/JP2024/029923**

(87) International publication number:
**WO 2025/105003 (22.05.2025 Gazette 2025/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.11.2023 JP 2023193062**

(71) Applicant: **SUMITOMO RUBBER INDUSTRIES,
LTD.**
**Kobe-shi, Hyogo 651-0072 (JP)**

(72) Inventor: **CHUJO, Fumiya**
**Kobe-shi, Hyogo 651-0072 (JP)**

(74) Representative: **Manitz Finsterwald
Patent- und Rechtsanwaltspartnerschaft mbB
Martin-Greif-Straße 1
80336 München (DE)**

(54) **ELECTRODE ACTIVE MATERIAL, ELECTRODE, AND LITHIUM ION SECONDARY BATTERY AND METHOD FOR MANUFACTURING SAME**

(57)    It is an object of the present invention to improve charge and discharge capacity and a capacity retention rate of an active material constituting an electrode of a lithium-ion secondary battery. Provided is an electrode active material of particles comprising an organic sulfur compound and a carbon material.

FIG. 1

**Description**

TECHNICAL FIELD

The present invention relates to a novel electrode active material, an electrode comprising the electrode active material, and a lithium-ion secondary battery comprising the electrode and producing methods thereof.

BACKGROUND ART

Lithium-ion secondary batteries have been mainly used as batteries for portable electronic devices because of their large charge and discharge capacity. In addition, they have been used more and more as batteries for electric vehicles as well, and their performance is expected to improve further.

Patent Document 1 describes a sulfur-based active material obtained by baking a raw material comprising a polymer, which comprises methacrylonitrile as a monomer component, and sulfur.

On the other hand, as negative electrode active materials, it has been proposed to use materials that can absorb and release more lithium ions, such as silicon (Si), tin (Sn), and the like in order to increase battery capacity of lithium-ion secondary battery.

PRIOR ART DOCUMENT

Patent Document

Patent Document 1: JP 2020-167144 A

SUMMARY OF THE INVENTION

PROBLEMS TO BE SOLVED BY THE INVENTION

However, active materials other than such an active material as described in Patent Document 1 has still been expected to be developed.

Moreover, the above-described materials that have been proposed as the negative electrode active materials undergo a large change in volume by absorption and release of lithium ions, and thus they have a problem of poor cycle characteristics when charging and discharging are repeated. Although carbon materials such as graphite, hard carbon, and the like are also used, their capacity have almost reached their theoretical limit and it cannot be expected to increase their capacity significantly.

It is an object of the present invention to provide a novel electrode active material capable of improving charge and discharge capacity and a capacity retention rate, an electrode comprising the electrode active material, that is, a positive electrode or a negative electrode, and a lithium-ion secondary battery comprising the electrode, and producing methods thereof.

MEANS TO SOLVE THE PROBLEM

The present invention relates to an electrode active material of particles comprising an organic sulfur compound and a carbon material.

EFFECTS OF THE INVENTION

According to the present invention, a novel electrode active material capable of improving charge and discharge capacity and a capacity retention rate, an electrode comprising the electrode active material, that is, a positive electrode or a negative electrode, and a lithium-ion secondary battery comprising the electrode, and producing methods thereof can be provided.

In the specification, the term "cycle characteristics" refers to characteristics in which charge and discharge capacity of a secondary battery is maintained despite repeated charging/discharging. Therefore, as charging and discharging are repeated, a secondary battery with a high degree of decrease in charge and discharge capacity and a low capacity retention rate has poor cycle characteristics, while, on the contrary, a secondary battery with a low degree of decrease in charge and discharge capacity and a high capacity retention rate has excellent cycle characteristics.

BRIEF DESCRIPTION OF THE DRAWINGS

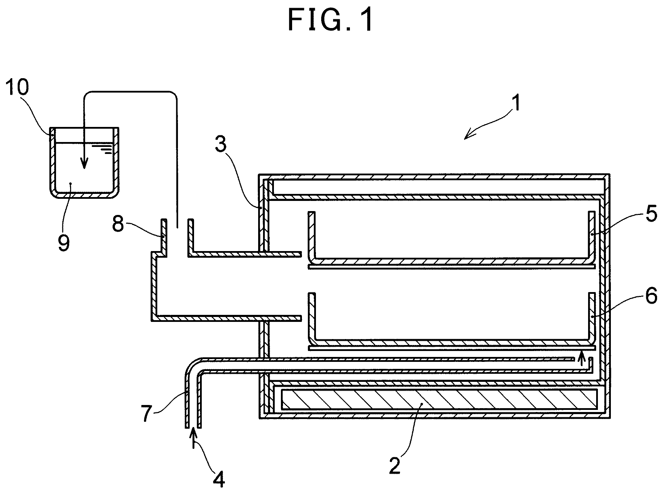

FIG. 1 is a cross-sectional view schematically showing a reaction device used for producing an electrode active material in Examples of the present invention.

EMBODIMENT FOR CARRYING OUT THE INVENTION

A structure of one embodiment of the present invention will be described below in detail. Besides, numerical values of upper limits and lower limits relating to "or more", "or less", "greater than", "less than", etc. for descriptions of numerical ranges are numerical values that can be arbitrarily combined, and numerical values in Examples can also be these upper limits and/or the lower limits. Moreover, a numerical range shown to include lower limits or upper limits is interpreted as simultaneously disclosing a numerical range not including the upper limits or the lower limits, unless contrary to the purpose of the specification, and conversely, a numerical range shown not to include lower limits or upper limits is interpreted as simultaneously disclosing a numerical range including the lower limits or the upper limits, unless contrary to the purpose of the specification.

One embodiment of the present invention is an electrode active material of particles comprising an organic sulfur compound and a carbon material.

Although it is not intended to be bound by a theory, the following can be considered as a reason why the electrode active material of the present embodiment can improve the charge and discharge capacity and the capacity retention rate. That is, the electrode active material of the present embodiment is composed of particles comprising an organic sulfur compound and a carbon material, and is considered to form a three-dimensional conductive network through coupling of the carbon material with the organic sulfur compound, which is considered to contribute to improvements in charge and discharge capacity and capacity retention rate.

It is preferable that the carbon material is a carbon fiber, and that the carbon fiber comprises a fiber having an average fiber length of greater than 1 $\mu$m and an average fiber diameter of less than 100 nm.

With such a configuration, it is considered that a three-dimensional conductive network is easily formed.

The carbon fiber preferably comprises a carbon nanotube.

It is considered that an excellent three-dimensional conductive network is formed with the fiber being the carbon nanotube.

A content of the carbon material in the electrode active material is preferably less than 4.00% by mass.

It is preferable that the electrode active material further comprises a metal compound, the metal compound comprising at least one selected from the group consisting of iron, molybdenum, vanadium, and titanium.

The metal compound is preferably an iron compound.

Another embodiment of the present invention is an electrode comprising the electrode active material.

Preferably, the electrode comprises a current collector, the current collector comprising a metal foil, and $A_{CM}$ and D satisfy the following inequality,

$$(1)\ D \times A_{CM} \times 10 > 1.00$$

where $A_{CM}$ represents a content, in % by mass, of the carbon material in the electrode active material and D represents an application density, in mg/cm$^2$, of the electrode active material to the current collector.

By setting a product of the application density and the content of the carbon material to exceed a predetermined value, it is considered that an effect of adding the carbon material can be fully exerted.

Preferably, the electrode comprises a current collector, the current collector comprising a metal foil, and $A_{CM}$, D, and T satisfy the following inequality,

$$(2)\ D \times A_{CM}/T \times 10 > 0.100$$

where $A_{CM}$ represents a content, in % by mass, of the carbon material in the electrode active material, D represents an application density, in mg/cm$^2$, of the electrode active material to the current collector, and T represents a thickness, in $\mu$m, of the metal foil.

By setting the application density, the content of the carbon material, and the thickness of the metal foil to satisfy the above-described inequality, it is considered that the effect of adding the carbon material can be fully exerted.

The electrode comprises a current collector, the current collector comprising a metal foil, and D is preferably greater than 2.50 mg/cm$^2$, where D represents an application density, in mg/cm$^2$, of the electrode active material to the current collector.

$DC_3$ is preferably greater than 400 mAh/g, where $DC_3$ represents a third discharge capacity when the electrode is used as a positive electrode.

$DC_{10}$ is preferably greater than 350 mAh/g, where $DC_{10}$ represents a tenth discharge capacity when the electrode is used as a positive electrode.

Another embodiment of the present invention is a lithium-ion secondary battery comprising the electrode.

Preferably, the lithium-ion secondary battery further comprises an electrolyte, and $A_{CM}$, D, and V satisfy the following inequality,

$$(3)\ D \times A_{CM}/V \times 10 > 1.00$$

where V represents a volume, in mL, of the electrolyte, $A_{CM}$ represents a content, in % by mass, of the carbon material in the electrode active material, and D represents an application density, in mg/cm$^2$, of the electrode active material to the current collector.

By setting the application density, the content of the carbon material, and the volume of the electrolyte to satisfy the above-described inequality, it is considered that the effect of adding the carbon material can be fully exerted.

Another embodiment of the present invention is a method of producing a lithium-ion secondary battery, the method comprising the steps of:

(1) mixing sulfur, an organic compound, and a carbon material to obtain a baking raw material;
(2) baking the baking raw material to obtain a baked material;
(3) pulverizing the baked material into particles to obtain an electrode active material;
(4) producing an electrode using the electrode active material; and
(5) producing a lithium-ion secondary battery using the electrode.

<Definitions>

An "electrode active material" is one of electrode materials of a battery, which refers to a material involved in reaction that generates electricity. The electrode active material includes a positive electrode active material and a negative electrode active material.

A "particle" refers to one in a state where an electrode active material has been made fine enough to be suitable for mixing with other materials for the purpose of the present invention. Regarding a particle that constitutes an electrode active material, a size of such a particle is not particularly limited as long as the above-described mixing can be appropriately performed. For example, if a "particle" is expressed in terms of median diameter, it can be in a range from 1 nm to 1000 μm.

A "particle size" is expressed as a median diameter (d50), unless otherwise specified.

An "average fiber length" is calculated by photographing fibers with a transmission or scanning electron microscope, measuring lengths of 50 fibers along a fiber axis, and calculating an arithmetic average thereof. The average fiber length is applied to a carbon fiber and the like.

An "average fiber diameter" is calculated by photographing fibers with a transmission or scanning electron microscope, measuring diameters of 50 fibers, and calculating an arithmetic average thereof. The average fiber diameter is applied to a carbon fiber and the like.

An "active material" refers to a material that is responsible for an oxidation-reduction reaction that takes place for an energy conversion in a lithium-ion secondary battery.

An "application density" is a mass, in mg, of an active material coated on a current collector per unit area, in cm$^2$.

A "volume of an electrolyte" means a total volume of an electrolyte solution including a solute, or a solid electrolyte. The unit is mL.

An "initial discharge capacity" refers to the third discharge capacity, unless otherwise specified.

<Measuring method>

"Amounts of elements" are each measured by the method described in Examples. For example, it is applied to sulfur, carbon, metal including iron, hydrogen, nitrogen, etc.

A "particle size distribution" is measured with a laser diffraction/scattering type particle size distribution analyzer (particle size distribution analyzer PSA1090L manufactured by Anton Paar GmbH) using water as a dispersion medium.

A "median diameter d50" is a volume basis cumulative 50% size, in μm, in a particle size distribution.

A "content of a carbon material" is a content ratio, in % by mass, of the carbon material to the entire electrode active material, and is measured by the method described in the Examples section below.

The electrode active material, the electrode, and the lithium-ion secondary battery of the present embodiment will be described below.

<Electrode active material>

The electrode active material of the present invention is an electrode active material of particles comprising an organic sulfur compound and a carbon material.

The electrode active material of the present embodiment is obtained by baking a raw material in which sulfur, an organic compound, and a carbon material are mixed, and pulverizing the baked material into particles, and it is considered that the baking causes sulfur and the organic compound to react with each other to form an organic sulfur compound, and that a three-dimensional conductive network is formed through coupling of the carbon material with the organic sulfur compound.

(Amounts of elements)

An amount of a sulfur element, an amount of a carbon element, an amount of a hydrogen element, an amount of a nitrogen element, and an amount of a metal element as shown below are amounts of respective elements contained in the electrode active material. Besides, when the electrode active material contains an iron compound, containing iron disulfide as the iron compound is knowledge based on comparison with a peak profile of a diffraction intensity of iron disulfide (iron pyrite) which is obtained by X-ray diffraction measurement.

<<Amount of sulfur element>>

An amount of a sulfur element is preferably greater than 45.0% by mass, more preferably greater than 50.0% by mass, further preferably greater than 55.0% by mass, further preferably greater than 60.0% by mass, in the electrode active material, from the viewpoint of improving performance of the electrode and/or the battery. There is no particular limit to an upper limit of the amount of the sulfur element, but it is usually 80.0% by mass, and may be 70.0% by mass or 65.0% by mass.

<<Amount of carbon element>>

An amount of a carbon element is preferably greater than 5.0% by mass, more preferably greater than 10.0% by mass, further preferably greater than 15.0% by mass, from the viewpoint of improving performance of the electrode and/or the battery. On the other hand, the amount of the element is preferably less than 30.0% by mass, more preferably less than 25.0% by mass, further preferably less than 23.0% by mass.

<<Amount of hydrogen element>>

Hydrogen (H) in the organic compound is reacted with sulfur by baking to become hydrogen sulfide, which is released outside the system. Thus, an amount of a hydrogen element in the electrode active material is preferably less than 1.0% by mass, more preferably less than 0.7% by mass, further preferably less than 0.5% by mass. When it is less than 1.0% by mass, there is a tendency that baking (sulfurization reaction) is sufficient. Therefore, in this case, the charge and discharge capacity tends to be improved.

<<Amount of nitrogen element>>

An amount of a nitrogen element, in % by mass, in the electrode active material may be 0% by mass if no nitrogen source is used as a raw material. For example, in case of preparing a raw material by the WET method, if, as a solvent thereof, a solvent containing a nitrogen atom is used, a nitrogen element can be detected.

<<Amount of metal element>>

It is preferable that the electrode active material of the present embodiment further comprises a metal compound comprising at least one selected from the group consisting of iron, molybdenum, vanadium, and titanium. Moreover, the metal compound is preferably an iron compound. One or more kinds of the metal compound can be used.

When the electrode active material of the present embodiment contains a metal compound, an amount of a metal element, in % by mass, in the electrode active material is preferably greater than 10.0% by mass, more preferably greater than 15.0% by mass, further preferably greater than 20.0% by mass, while the amount of the metal element is preferably less than 30.0% by mass, more preferably less than 25.0% by mass, further preferably less than 24.0% by mass, from the viewpoint of improving performance of the electrode and/or the battery.

(Carbon material)

In the electrode active material of the present embodiment, the carbon material is preferably one having a graphite structure. Moreover, the carbon material is preferably electrically conductive. Examples of the carbon material can include, for example, a porous carbon material such as an activated carbon and the like, graphite, carbon black, acetylene black, and Ketjen black, as well as carbon fibers such as a carbon fiber, a vapor-grown carbon fiber (VGCF), a carbon nanotube (CNT), a carbon nanofiber, and the like, and nanocarbon materials in forms of other than carbon fibers, such as graphene, fullerene, and the like. Among them, carbon fibers such as a carbon fiber, a vapor-grown carbon fiber (VGCF), CNT, a carbon nanofiber, and the like are preferable, and CNT is particularly preferable. Here, a carbon fiber is a fiber that is obtained by heating and carbonizing a precursor of an organic fiber, as defined in JIS L0204-2:2020, and that is composed of carbon whose mass ratio is 90% or more. One or more kinds of the carbon material can be used.

When the carbon material is a carbon fiber, it is preferable that, as a form of the fiber constituting the carbon fiber, an average fiber length is a predetermined value or more and an average fiber diameter is a predetermined value or less, from the viewpoint of improving performance of the electrode and/or the battery. This is because it is considered that the conductivity of the electrode active material can be improved. The average fiber length is preferably greater than 1 $\mu$m, more preferably greater than 1.5 $\mu$m, further preferably 2 $\mu$m or more. There is no particular limit to an upper limit of the average fiber length, and it may be 100 $\mu$m, 50 $\mu$m, or 20 $\mu$m. Moreover, the average fiber diameter is preferably less than 100 nm, more preferably less than 50 nm, further preferably less than 10 nm. There is no particular limit to a lower limit of the average fiber diameter, but it is usually about 1 nm.

An aspect ratio of the carbon material is preferably greater than 10, more preferably greater than 100, further preferably greater than 1,000, and it is also preferably less than 100,000, more preferably less than 50,000, further preferably less than 10,000.

A specific surface area of the carbon material is preferably 400 m$^2$/g or more, and it is preferably 2400 m$^2$/g or less, from the viewpoint of the effects of the present invention. The specific surface area is more preferably 500 m$^2$/g or more, further preferably 600 m$^2$/g or more. On the other hand, the specific surface area is more preferably 2000 m$^2$/g or less, further preferably 1800 m$^2$/g or less. Besides, the specific surface area is measured by the BET multipoint method.

A G/D ratio of the carbon material is preferably 10 or more from the viewpoint of the effects of the present invention. The G/D ratio is more preferably 20 or more, further preferably 30 or more, further preferably 40 or more. On the other hand, there is no particular limit to an upper limit of the G/D ratio, but if it is no less than 90, it can be said that the carbon material has extremely few defects. Here, the G/D ratio is a ratio of a representative Raman shift peak in a Raman spectrum for a carbon material, and more specifically, it is a ratio of a G-band peak derived from a graphite structure to a D-band peak derived from defects. Besides, the Raman spectrum is measured with RAMANtouch (excitation wavelength $\lambda$=532 nm, grating: 1200 gr/mm, resolution: 1.2 cm-1) manufactured by Nanophoton.

An amount of metal impurities in the carbon material is preferably 5% by mass or less from the viewpoint of the effects of the present invention. The amount of metal impurities is preferably 3% by mass or less, more preferably 2% by mass or less, further preferably 1% by mass or less. The smaller the amount of metal impurities is, the better it is, but, for example, 0.1% by mass is sufficient as a small amount of metal impurities. Besides, metal impurities are measured by Inductively Coupled Plasma Atomic Emission Spectroscopy (ICP-AES).

A content, in $A_{CM}$, of the carbon material in the electrode active material is preferably less than 4.00% by mass. The content of the carbon material is preferably less than 2.00% by mass, more preferably less than 1.00% by mass, further preferably less than 0.50% by mass, further preferably less than 0.40% by mass, further preferably 0.35% by mass or less. On the other hand, the content is preferably greater than 0.04% by mass, more preferably greater than 0.05% by mass, further preferably greater than 0.06% by mass, further preferably 0.07% by mass or more, further preferably greater than 0.10% by mass, further preferably greater than 0.15% by mass, further preferably 0.19% by mass or more, further preferably greater than 0.20% by mass, further preferably greater than 0.30% by mass.

(Median diameter)

The electrode active material of the present embodiment is composed of particles, and a size of the particle is suitable for producing an electrode. A preferred range of a particle size of the electrode active material is preferably about greater than 1.0 $\mu$m and less than 40.0 $\mu$m in terms of median diameter (d50) from the viewpoint of improving performance of the electrode and/or the battery. The median diameter is more preferably greater than 1.5 $\mu$m, further preferably greater than 2.0 $\mu$m, further preferably greater than 3.0 $\mu$m. Moreover, the median diameter is more preferably less than 30.0 $\mu$m, further preferably less than 25.0 $\mu$m, further preferably less than 20.0 $\mu$m, further preferably less than 15.0 $\mu$m, further preferably less than 10.0 $\mu$m, further preferably less than 8.0 $\mu$m. The median diameter can be measured by a method described in Examples section below.

(Other components)

The electrode active material of the present embodiment can contain materials described in the Producing method section below in the same manner as described in the same section.

<Electrode>

The electrode of the present embodiment is an electrode comprising the above-described electrode active material. The electrode is preferably one obtained by mixing an electrode active material of particles comprising an organic sulfur compound and a carbon material, together with other electrode materials such as a conductive aid, a binder, and the like as necessary, and applying the mixture onto a current collector.

The electrode for lithium-ion secondary battery of the present embodiment can be configured by using materials described in the Producing method section below in the same manner as described in the same section. That is, when the above-described electrode for lithium-ion secondary battery is used as a positive electrode, a conductive aid, a binder, a current collector, etc. described in the Producing method section below can be used in the same manner as described in the same section to form a positive electrode for lithium-ion secondary battery, and when the above-described electrode for lithium-ion secondary battery is used as a negative electrode, a conductive aid, a binder, a current collector, etc. described in the Producing method section below can be used in the same manner as described in the same section to form a negative electrode for lithium-ion secondary battery. As such, the descriptions in the Producing method section below can be taken into consideration as descriptions of the electrode for lithium-ion secondary battery of the present embodiment.

Preferably, the electrode of the present embodiment comprises a current collector, the current collector comprising a metal foil, and $A_{CM}$ and D satisfy the following inequality,

$$(1)\ D \times A_{CM} \times 10 > 1.00$$

where $A_{CM}$ represents a content, in % by mass, of the carbon material in the electrode active material and D represents an application density, in $mg/cm^2$, of the electrode active material to the current collector.

(Inequality (1))

The right side in the inequality (1) is more preferably 1.50, further preferably 2.00, further preferably 2.50, further preferably 2.75, further preferably 5.00, further preferably 10.0, further preferably 50.0, further preferably 100. Besides, an upper limit of a value on the left side in the inequality (1) can be assumed to be about 500 as the reference value.

(Application density, in $mg/cm^2$)

The application density, in $mg/cm^2$, of the electrode active material on the electrode is preferably greater than 2.50 $mg/cm^2$, more preferably greater than 3.00 $mg/cm^2$, further preferably greater than 3.50 $mg/cm^2$, further preferably greater than 3.80 $mg/cm^2$, further preferably greater than 3.90 mg/cm. There is no particular limit to an upper limit of the application density, and the higher the application density is, the more preferable it is, but it is naturally limited due to the form of the inequality (1). Thus, there is little significance in mentioning the upper limit of the application density. However, the application density can usually be assumed to be about 15.0 $mg/cm^2$.

(Inequality (2))

Preferably, the electrode of the present embodiment comprises a current collector, the current collector comprising a metal foil, and $A_{CM}$, D, and T satisfy the following inequality,

$$(2)\ D \times A_{CM}/T \times 10 > 0.100$$

where $A_{CM}$ represents a content, in % by mass, of the carbon material in the electrode active material, D represents an application density, in $mg/cm^2$, of the electrode active material to the current collector, and T represents a thickness, in $\mu m$, of the metal foil.

The right side in the inequality (2) is more preferably 0.120, further preferably 0.140, further preferably 0.160, further preferably 0.400, further preferably 0.600, further preferably 1.00, further preferably 3.00, further preferably 5.00, further preferably 6.00. An upper limit of a value on the left side in the inequality (2) can be assumed to be about 15.0 as the reference value.

(Thickness of metal foil (T))

A preferred range of a thickness T, in $\mu$m, of the metal foil is preferably 5 $\mu$m or more, more preferably 10 $\mu$m or more. On the other hand, T is preferably 40 $\mu$m or less, more preferably 30 $\mu$m or less, further preferably 25 $\mu$m or less.

(Charge and discharge capacity)

The electrode of the present embodiment exhibits excellent charge and discharge capacity. The third discharge capacity ($DC_3$), which is the initial discharge capacity, is a discharge capacity when charging and discharging with a discharge termination voltage of 1.0 V and a charge termination voltage of 3.0 V are performed three times after production of an electrode and a battery (the third discharging when charging and discharging is repeated as the first discharging, the first charging, the second discharging, the second charging, the third discharging, and the third charging). In the case of discharging, when discharging is performed at a constant current (current value equivalent to 50 mA per 1 g of a positive electrode active material), a voltage of 3.0 V finally drops to 1.0V. A total time, in h, taken for the voltage to drop from 3.0 V to 1.0 V is measured, which is multiplied by an applied current, in mA, to obtain a capacity, in mAh, and then which is divided by a weight of the active material to obtain a specific capacity, in mAh/g. On the other hand, in the case of charging, a voltage conversely rises due to charging with a constant current, and when it finally reaches 3.0 V, charging is terminated. The same applies to the tenth discharge capacity mentioned below.

[Initial discharge capacity ($DC_3$)]

The initial discharge capacity ($DC_3$), in mAh/g, when using the electrode of the present embodiment as a positive electrode is preferably greater than 400 mAh/g. The initial discharge capacity is more preferably greater than 450 mAh/g, further preferably greater than 500 mAh/g, further preferably 514 mAh/g or more, further preferably greater than 550 mAh/g, further preferably greater than 600 mAh/g, further preferably greater than 650 mAh/g, further preferably greater than 700 mAh/g, further preferably greater than 710 mAh/g. There is no particular limit to an upper limit of the initial discharge capacity, and the higher it is, the more preferable it is. Thus, there is little significance in mentioning the upper limit of the initial discharge capacity, but usually, it can also be assumed to be, for example, about 1000 mAh/g, merely as the reference value.

[Tenth discharge capacity ($DC_{10}$)]

A discharge capacity when repeating charging and discharging 10 times, i.e., the tenth discharge capacity ($DC_{10}$), in mAh/g, when using the electrode of the present embodiment as a positive electrode, is preferably greater than 350 mAh/g. The discharge capacity is preferably greater than 400 mAh/g, more preferably 478 mAh/g or more, further preferably greater than 500 mAh/g, further preferably 536 mAh/g or more, further preferably greater than 600 mAh/g, further preferably greater than 700 mAh/g, further preferably 710 mAh/g or more. There is no particular limit to an upper limit of the discharge capacity, and the higher it is, the more preferable it is. Thus, there is little significance in mentioning the upper limit of the discharge capacity, but usually, it can also be assumed to be, for example, about the value of the initial discharge capacity or about 900 mAh/g, merely as the reference value.

In addition, the third or tenth discharge capacity when the electrode of the present embodiment is used as a positive electrode is determined by a configuration of the positive electrode if it is measured so that a performance relating to the discharge capacity of the positive electrode can be fully exhibited using a negative electrode and an electrolyte within common technical knowledge that can be durably used as a lithium-ion secondary battery (i.e., such that Li is not depleted). For example, for the negative electrode, an amount of lithium used may be preferably two times or more, more preferably five times or more, further preferably ten times or more, further preferably 50 times or more (mol amount) an amount of sulfur (mol amount) in the positive electrode. Moreover, for example, for the electrolyte, when an amount of an electrolytic solution, in $\mu$L, is preferably 10 times or more, more preferably 20 times or more, further preferably 50 times or more an amount of sulfur, in mg, in the positive electrode, the discharge capacity of the positive electrode can be fully exhibited, leading to a longer battery life. On the other hand, in consideration of an energy density of the battery, it is preferable that the amount of the electrolytic solution is small. For example, the amount of the electrolytic solution, in $\mu$L, is preferably 5 times or less, more preferably 3 times or less, further preferably 1 time or less the amount of sulfur, in mg, in the positive electrode. Here, a volume V, in mL, of the electrolyte means a total volume of electrolyte solutions including a solute. Besides, the electrolyte may be in a form of an electrolytic solution or in a form of a solid (solid electrolyte), or a combination of them can be used.

(Application)

The electrode for lithium-ion secondary battery of the present embodiment can be used as a positive or negative electrode of a lithium-ion secondary battery. Moreover, the electrode for lithium-ion secondary battery of the present embodiment is preferably used as a positive electrode of a lithium-ion secondary battery.

<Lithium-ion secondary battery>

The lithium-ion secondary battery of the present embodiment is a lithium-ion secondary battery comprising the above-described electrode.

The lithium-ion secondary battery of the present embodiment can be configured by using materials described in the Producing method section below in the same manner as described in the same section. That is, when the above-described electrode for lithium-ion secondary battery is used as a positive electrode, the lithium-ion secondary battery can be configured by using a negative electrode, an electrolyte, a separator, etc. described in the Producing method section below in the same manner as described in the same section. On the other hand, when the above-described electrode for lithium-ion secondary battery is used as a negative electrode, the lithium-ion secondary battery can be configured by using a positive electrode, an electrolyte, a separator, etc. described in the Producing method section below in the same manner as described in the same section. As such, the descriptions in the Producing method section below can be taken into consideration as descriptions of the present lithium-ion secondary battery.

(Inequality (3))

Preferably, the lithium-ion secondary battery of the present embodiment further comprises an electrolyte, and $A_{CM}$, D, and V satisfy the following inequality,

$$(3)\ D{\times}A_{CM}/V{\times}10>1.00$$

where V represents a volume, in mL, of the electrolyte, $A_{CM}$ represents a content, in % by mass, of the carbon material in the electrode active material, and D represents an application density, in mg/cm$^2$, of the electrode active material to the current collector.

The right side in the inequality (3) is more preferably 3.00, further preferably 5.00, further preferably 9.90, further preferably 20.0, further preferably 26.0, further preferably 30.0, further preferably 38.0, further preferably 100, further preferably 300, further preferably 370. An upper limit of a value on the left side in the inequality (3) can be assumed to be about 700 as the reference value.

(Volume V of electrolyte)

Since a range of a volume V, in mL, of the electrolyte can vary depending on a size of a battery, it is not generally defined, and it has only to use the minimum amount that brings out performance of the electrode active material and allows the battery to operate satisfactorily. For example, in the case of the coin-type battery shown in Examples, the volume is preferably 0.10 mL or more, more preferably 0.12 mL or more, further preferably 0.15 mL or more, merely as the reference value. On the other hand, V is preferably 0.40 mL or less, more preferably 0.30 mL or less, further preferably 0.28 mL or less, further preferably 0.25 mL or less.

(Application)

The lithium-ion secondary battery of the present embodiment is useful as a lithium-ion secondary battery with improved overall performance of charge and discharge capacity, a capacity retention rate, and an energy density, and can be used as a battery for a portable information terminal such as a smartphone, a notebook personal computer, and the like, a portable electronic device such as a music player, a digital camera, and the like, and a medical device, as well as for a battery for a next-generation clean energy automobile such as a hybrid electric vehicle (HEV), an electric vehicle (EV), a plug-in hybrid electric vehicle (PHEV), and the like.

<Producing method>

The producing method of the electrode active material, the electrode, and the lithium-ion secondary battery of the present embodiment will be described below in order.

(Production of electrode active material)

The electrode active material of the present embodiment can be produced by, for example, (1) a step of mixing sulfur, an organic compound, and a carbon material to obtain a baking raw material, (2) a step of baking the baking raw material to obtain a baked material, and (3) a step of pulverizing the baked material into particles to obtain an electrode active material.

[Raw material]

The raw material will be described below.

<<Organic compound>>

The organic compound is not particularly limited as long as it is a compound containing at least a carbon atom and a hydrogen atom, and when baked with sulfur under a non-oxidizing thermal atmosphere in the presence of a carbon material, it takes in sulfur to form an organic sulfur compound. Moreover, the organic compound may be one containing a heteroatom such as a nitrogen atom, a sulfur atom, and the like. Specific examples of the organic compound include, for example, a polymer of unsaturated chain hydrocarbon-based monomers, a condensate of a substituted aromatic hydrocarbon and sulfur chloride, and the like. The organic compound can be used alone, or two or more thereof can be used in combination.

<<Polymer of unsaturated chain hydrocarbon-based monomers>>

Examples of the polymer of unsaturated chain hydrocarbon-based monomers include, for example, resin such as an acrylic resin and the like. Moreover, examples of the polymer of unsaturated chain hydrocarbon-based monomers include a diene-based rubber and the like. One or more kinds of the polymer of unsaturated chain hydrocarbon-based monomers can be used.

Examples of the acrylic resin include, for example, at least one polymer selected from the group consisting of: a polymer obtained by polymerizing a monomer comprising at least one selected from the group consisting of acrylate compounds represented by the following chemical formula (1); a polymer obtained by polymerizing a monomer consisting of at least one selected from the group consisting of acrylate compounds represented by the following chemical formula (1); a polymer obtained by polymerizing a monomer comprising at least one selected from the group consisting of acrylate compounds represented by the following chemical formula (1) and at least one selected from the group consisting of diacrylate compounds represented by the following chemical formula (2); and a polymer obtained by polymerizing a monomer consisting of at least one selected from the group consisting of acrylate compounds represented by the following chemical formula (1) and at least one selected from the group consisting of diacrylate compounds represented by the following chemical formula (2). One or more kinds of the acrylic resin can be used.

$$CH_2=C\,(R^{11})\,COOR^{12} \qquad (1)$$

(wherein, $R^{11}$ is a hydrogen atom or a methyl group, and $R^{12}$ is an alkyl group.)

$$CH_2=C\,(R^{21})\,COO\text{-}Y\text{-}OCO\,(R^{22})\,C=CH_2 \qquad (2)$$

(wherein $R^{21}$ and $R^{22}$ are the same or different and are each a hydrogen atom or a methyl group, Y is a linear hydrocarbylene group, which may have at least one substituent selected from the group consisting of a hydroxyl group and an alkyl group, and a carbon skeleton constituting the hydrocarbylene group may have an ether bond with an oxygen atom, provided that when there are two or more of the ether bonds, any adjacent oxygen atoms always have two or more intervening carbon atoms between them.)

In the chemical formula (1), $R^{11}$ is preferably a methyl group, and $R^{12}$ is preferably an alkyl group having 1 to 6 carbon atoms, more preferably an alkyl group having 1 to 4 carbon atoms, and among them, more preferably a methyl group, n-butyl, i-butyl, or t-butyl group. Examples of the compound represented by the formula (1) include, for example, methyl (meth)acrylate, butyl (meth)acrylate, and the like, more preferably methyl methacrylate and butyl methacrylate. Here, "(meth)acrylate" of methyl (meth)acrylate and butyl (meth)acrylate represents either "acrylate" or "methacrylate" (the same shall apply hereinafter). A further preferred example of the compound represented by the chemical formula (1) is butyl methacrylate.

In the chemical formula (2), both $R^{21}$ and $R^{22}$ are preferably methyl groups. The number of carbon atoms in the hydrocarbylene group (straight chain) that is Y is preferably 2 to 6, more preferably 2 or 3. The number of substituents in Y is preferably 1 to 4, more preferably 1 or 2. As the substituents in Y, one or more substituents selected from the group consisting of a hydroxyl group and an alkyl group having 1 to 4 carbon atoms are preferable, and as the alkyl group having 1 to 4 carbon atoms, a methyl group is preferable. When the carbon skeleton of Y has an ether bond formed by an oxygen atom, for example, a moiety corresponding to -Y-O- is preferably represented by the following chemical formula (3) (provided that no substituent in Y is considered in the chemical formula (3)):

$$-(CH_2)_l-(CH_2CH_2O)_m-(CH_2CH_2CH_2O)_n- \qquad (3)$$

(wherein l is 0 to 6, m is 0 to 3, and n is 0 to 2. However, l, m, and n cannot be 0 at the same time.)

In the chemical formula (3), it is preferable that l is 1, 2, 3, 4, 5, or 6, and m and n are 0; m is 1, 2, or 3, and l and n are 0; or n is 1 or 2, and l and m are 0.

Examples of the compound represented by the chemical formula (2) include, for example, ethylene glycol di(meth)acrylate, diethylene glycol di(meth)acrylate, triethylene glycol di(meth)acrylate, 1,6-hexanediol di(meth)acrylate, neopentyl glycol di(meth)acrylate, glycerin di(meth)acrylate, and the like. Among them, ethylene glycol dimethacrylate is preferable.

Preferred examples of the acrylic resin include a homopolymer of methyl (meth)acrylate, a homopolymer of butyl (meth)acrylate, a copolymer of methyl (meth)acrylate and ethylene glycol di(meth)acrylate, a copolymer of butyl (meth) acrylate and ethylene glycol di(meth)acrylate, and the like. Among them, as the acrylic resin, an acrylic resin of methacrylate type is preferable. More preferred examples of the acrylic resin include a copolymer of methyl methacrylate and ethylene glycol dimethacrylate.

In the present embodiment, the acrylic resin is preferably in a form of a fine particle. Here, the fine particle refers to a particle having a particle size of 300.0 μm or less. The particle size is preferably 270.0 μm or less, more preferably 200.0 μm or less, further preferably 100.0 μm or less, further preferably 50.0 μm or less, further preferably 20.0 μm or less, further preferably 15.0 μm or less, further preferably 13.0 μm or less, further preferably 10.0 μm or less, further preferably 6.0 μm or less. On the other hand, a lower limit of the particle size is, but not particularly limited to, usually, for example, 0.1 μm or more, preferably 1.0 μm or more. The particle size is a value (median diameter) measured by a particle size distribution analyzer PSA1090L manufactured by Anton Paar GmbH.

The acrylic resin may be a spherical fine particle or a porous fine particle. When the acrylic resin is porous, its oil absorption amount is preferably 100 mL/100 g or more, more preferably 110 mL/100 g or more, further preferably 120 mL/100 g or more, further preferably 130 mL/100 g or more, further preferably 140 mL/100 g or more. The oil absorption amount is a value measured according to JIS K 5101-13-2:2004. More specifically, it can be measured by the method described in Paragraph 0069 of JP 2017-88501 A.

An Mw of the acrylic resin is not particularly limited as long as it has the above-described structure. However, the Mw of the acrylic resin is usually in a range of 2000 to 1500000. The Mw is a value measured by gel permeation chromatography (GPC) (calibrated with polystyrene).

The acrylic resin is commercially available or can be produced by a conventional method within the purview of knowledge of those skilled in the art. Examples of the commercially available acrylic resin include, for example, those manufactured by Sekisui Kasei Co., Ltd.

Examples of the diene-based rubber include, for example, a natural rubber, an isoprene rubber, a butadiene rubber such as a high-cis polybutadiene rubber and the like, etc. The diene-based rubber is commercially available or can be produced by a conventional method within the purview of knowledge of those skilled in the art.

<<Condensate of substituted aromatic hydrocarbon and sulfur chloride>>

Examples of the condensate of the substituted aromatic hydrocarbon and sulfur chloride include, for example, a condensate of alkylphenol and sulfur chloride, and the like. Specific examples of the condensate of alkylphenol and sulfur chloride include, for example, TACKIROL V200, TS3108, and TS3109 manufactured by Taoka Chemical Co., Ltd., Vultac3 manufactured by Arkema, and the like. One or more kinds of the condensate of the substituted aromatic hydrocarbon and sulfur chloride can be used.

<<Carbon material>>

As the carbon material, the above-described materials can be used.

A content of the carbon material in the baking raw material is preferably less than 5 parts by mass based on 100 parts by mass of the organic compound from the viewpoint of improving performance of the electrode and/or the battery. The content is more preferably less than 1 part by mass, further preferably less than 0.5 parts by mass. On the other hand, the content is preferably greater than 0.05 parts by mass, more preferably greater than 0.07 parts by mass, further preferably 0.10 parts by mass or more.

<<Sulfur>>

As sulfur, any of those in various forms such as a powdered sulfur, an insoluble sulfur, a precipitated sulfur, a colloidal sulfur, and the like can be used. Among them, a precipitated sulfur and a colloidal sulfur are preferable. One or more kinds of sulfur can be used.

A content of sulfur in the baking raw material is preferably greater than 50 parts by mass, more preferably greater than 100 parts by mass, further preferably greater than 300 parts by mass, further preferably greater than 400 parts by mass, further preferably 500 parts by mass or more, based on 100 parts by mass of the organic compound, from the viewpoint of improving performance of the electrode and/or the battery. When the content is greater than 50 parts by mass, there is a tendency that charge and discharge capacity and cycle characteristics can be improved. On the other hand, there is no particular upper limit to the content of sulfur, but it is preferably less than 1000 parts by mass, more preferably less than 900 parts by mass, further preferably less than 800 parts by mass, further preferably less than 700 parts by mass. When the content is less than 1000 parts by mass, there is a tendency to be advantageous in terms of cost. Besides, in the specification, the term "cycle characteristics" refers to characteristics in which charge and discharge capacity of a secondary battery is maintained despite repeated charging and discharging. Therefore, as charging and discharging are repeated, a secondary battery with a high degree of decrease in charge and discharge capacity and a low capacity retention rate has poor cycle characteristics, while, on the contrary, a secondary battery with a low degree of decrease in charge and discharge capacity and a high capacity retention rate has excellent cycle characteristics.

As sulfur, any of various allotropes can be used, but those comprising $S_8$ sulfur which is solid at normal temperature and pressure are preferable, and $S_8$ sulfur alone is more preferable.

<<Raw-material metal compound>>

When the electrode active material comprises a metal compound comprising at least one selected from the group consisting of iron, molybdenum, vanadium, and titanium, a raw-material metal compound containing metals corresponding to these metals is used as a baking raw material.

<<Raw-material iron compound>>

When metal is iron, examples of a raw-material iron compound include an iron compound containing a divalent or trivalent iron ion, but it is not particularly limited as long as it decomposes during baking and reacts with sulfur to produce iron disulfide, and various compounds can be used. Examples of the raw-material iron compound include an iron acid salt, an iron complex, and the like. Examples of the iron acid salt include both an organic acid salt of iron and an inorganic acid salt of iron. On the other hand, examples of the iron complex include a neutral iron complex and an iron complex ion salt (iron complex salt). Among them, an organic acid salt of iron, an inorganic acid salt of iron, or a neutral iron complex is preferable. One or more kinds of the raw-material iron compound can be used.

Examples of the organic acid salt of iron include, for example, a salt of divalent iron ($Fe^{2+}$) and organic acid, a salt of trivalent iron ($Fe^{3+}$) and organic acid, and the like. Among them, a salt of divalent iron and organic acid is preferable. The organic acid is, but not particularly limited to, one having a carboxyl group (-COOH), one having a sulfo group (-$SO_3H$), or the like. Among them, one having a carboxyl group is preferable. Specific examples of the organic acid include a fatty acid, oxalic acid, tartaric acid, citric acid, malic acid, succinic acid, and the like. Specific examples of fatty acid include, for example, those having 1 or more and 6 or less carbon atoms such as acetic acid, propionic acid, butyric acid, and the like. Among them, acetic acid, oxalic acid, and the like are preferable. Preferred examples of the organic acid salt of iron include iron (II) acetate, iron (II) oxalate, and the like. They may be hydrates. One or more kinds of organic acid salts of iron can be used.

Examples of the inorganic acid salt of iron include, for example, a salt of divalent iron ($Fe^{2+}$) and inorganic acid, a salt of trivalent iron ($Fe^{3+}$) and inorganic acid, and the like. Specific examples of the inorganic acid include hydrochloric acid, sulfuric acid, nitric acid, and the like. Among them, nitric acid and the like are preferable. Preferred examples of the inorganic acid salt of iron include iron (II) chloride, iron (III) chloride, iron (II) sulfate, iron (III) sulfate, iron (II) nitrate, iron (III) nitrate, and the like. They may be hydrates. One or more kinds of inorganic acid salts of iron can be used.

Examples of the iron complex include, for example, a divalent iron ($Fe^{2+}$) complex, a trivalent iron ($Fe^{3+}$) complex, and the like. The iron complex may be in a form of a neutral complex or in a form of a complex salt. A ligand that coordinates to the iron ion is not particularly limited, examples of which include, for example, halogen atoms such as a chlorine atom, a bromine atom, and the like, a cyano group, a dicyclopentadienyl group, N,N'-bis(salicylidene)ethylenediamine, and the like. Examples of the iron complex include, for example, potassium hexacyanidoferrate(II) ($[Fe(CN)_6]K_4$), potassium hexacyanidoferrate(III) ($[Fe(CN)_6]K_3$), sodium iron(III) chloride ($[FeCl_4]Na$), dicyclopentadienyl iron(II) (ferrocene), N,N'-bis(salicylidene)ethylene diaminato iron(III) chloride, and the like. One or more kinds of iron complexes can be used.

<<Raw-material molybdenum compound>>

When metal is molybdenum, examples of a raw-material molybdenum compound include molybdenum trioxide (VI), sodium molybdate (VI), hexaammonium heptamolybdate (VI), diammonium molybdate (VI), calcium molybdate (VI), molybdic acid (VI), phosphomolybdic acid (VI), molybdenum disulfide (VI), and the like. One or more kinds of the raw-material molybdenum compound can be used.

<<Raw-material vanadium compound>>

When metal is vanadium, examples of a raw-material vanadium compound include vanadium pentoxide (V), ammonium metavanadate (V), vanadium oxytrichloride (V), sodium metavanadate (V), potassium vanadate (V), sodium vanadate (V), vanadium tetrachloride (IV), vanadium oxysulfate (IV), vanadium oxydichloride (IV), vanadium oxide (IV), vanadium trichloride (IV), vanadium oxide (III), hexavanadium trioxide (IV, V), and the like. One or more kinds of the raw-material vanadium compound can be used.

<<Raw-material titanium compound>>

When metal is titanium, examples of a raw-material titanium compound include titanium oxide, titanium dioxide, titanium trioxide, titanium tetrachloride, and the like. One or more kinds of the raw-material titanium compound can be used.

<<Content of raw-material metal compound>>

A content of the raw-material metal compound in the baking raw material is preferably 50 parts by mass or more and 300 parts by mass or less based on 100 parts by mass of the organic compound from the viewpoint of improving performance of the electrode and/or the battery. The content is more preferably greater than 50 parts by mass, further preferably greater than 60 parts by mass, further preferably greater than 70 parts by mass, further preferably greater than 75 parts by mass. On the other hand, the content is more preferably less than 250 parts by mass, further preferably less than 200 parts by mass, further preferably less than 150 parts by mass, further preferably 100 parts by mass or less.

<<Median diameter of raw-material metal compound>>

When the raw-material metal compound is used as a baking raw material, it is preferably pulverized in advance. A median diameter (d50) of the raw-material metal compound is preferably 12.00 $\mu$m or less, more preferably 10.00 $\mu$m or less, more preferably 8.00 $\mu$m or less, further preferably 6.00 $\mu$m or less, further preferably 4.00 $\mu$m or less, further preferably 3.00 $\mu$m or less. On the other hand, a lower limit of the median diameter is not particularly limited, but it is usually about 0.10 $\mu$m or more, and may be about 1.00 $\mu$m or about 2.00 $\mu$m. The median diameter can be measured by the above-described method.

<<Specific surface area of raw-material metal compound>>

A specific surface area of the raw-material metal compound is preferably 1.0 m$^2$/g or more, more preferably 2.0 m$^2$/g or more, further preferably 3.0 m$^2$/g or more, further preferably 4.0 m$^2$/g or more, further preferably 4.5 m$^2$/g or more. On the other hand, an upper limit of the specific surface area is not particularly limited, but it is usually about 40.0 m$^2$/g or less, and may be about 20.0 m$^2$/g or less or about 10.0 m$^2$/g or less. The specific surface area can be measured by Full Automatic Surface Area Analyzer, Macsorb (HM-model 1201, manufactured by MOUNTECH Co., Ltd.).

The raw-material metal compound having the median diameter or specific surface area as described above can be prepared by a conventional method, for example, by pulverizing a metal compound with a pulverizer. As such a pulverizer, for example, one manufactured by Japan Analytical Industry Co., Ltd. (e.g., JFC-2000, etc.) can be used.

<<Other materials>>

A raw material may appropriately comprise other materials commonly used in this field, as desired.

(Producing step)

[Mixing step (1)]

A mixing step is a step of preparing a baking raw material. The mixing step can be performed by mixing sulfur, an organic compound, a carbon material, and, if desired, optional components such as a raw-material metal compound and the like.

The above-described mixing can be performed by a conventional method, and is not particularly limited as long as it is a method by which these components are mixed sufficiently. In the present embodiment, at least mixing by the WET method or mixing by the DRY method, which will be mentioned below, can be exemplified as a preferred mixing method.

<<WET method>>

In the present embodiment, the WET method comprises, for preparation of a raw material,

(a-1) a step of charging an organic compound and a carbon material into a solvent such as an organic solvent and the like to obtain a mixture,
(a-2) a step of removing the solvent from the mixture to obtain a dry mixture, and
(a-3) a step of mixing the dry mixture and sulfur.

In the step (a-1), the method of charging the organic compound and the carbon material into the organic solvent is not particularly limited as long as the mixture can be obtained by mixing them. For example, (1) the organic compound and the carbon material may be simultaneously charged into the organic solvent and mixed, (2) the organic compound may be charged into the organic solvent and mixed, and then the carbon material may be further charged and mixed, or (3) the carbon material may be charged into the organic solvent and mixed, and then the organic compound may be further charged and mixed.

In the step (a-1), as the organic solvent, an organic solvent commonly used in this field can be used, examples of which include, for example, N-methyl-2-pyrrolidone, N,N-dimethylformaldehyde, alcohol, hexane, water, acetone, ethers such as tetrahydrofuran, etc., and the like. Moreover, as the organic solvent, one that dissolves the organic compound is preferable. This is because it contributes to a good mixing. One or more kinds of these solvents can be used.

The step (a-1) can be performed by stirring them in a container such as, for example, a beaker and the like.

In the step (a-2), the removal of the organic solvent can be performed by a conventional method. For example, the removal can be performed by subjecting the mixture in the step (a-1) to a drying method such as drying by heating, drying under reduced pressure, drying by heating under reduced pressure, and the like.

The dry mixture thus obtained is preferably pulverized before being subjected to the next step. This is because, in this way, it can be expected that the mixing in the step (a-3) will be performed more appropriately.

In the step (a-3), the mixing of the dry mixture and sulfur can be performed by a conventional method, examples of which can include, for example, a method of mixing them using a blender, and the like.

When a raw-material metal compound is used as an optional component, the raw-material metal compound can be mixed in the step (a-1). In this case, an order of charging the raw-material metal compound into an organic solvent is not particularly limited similarly for other raw materials, and it may be charged in any order.

<<DRY method>>

In the present embodiment, the DRY method comprises, for preparation of a raw material,
(b-1) a step of mixing an organic compound, a carbon material, and sulfur, all in powder state.

Here, the powder refers to a state where each material that is solid has been made fine enough to be suitable for mixing for the purpose of the present embodiment. A size of each particle that constitutes the powder is not particularly limited as long as mixing is appropriately performed, but it is usually within a range of 1 $\mu$m or more and 40 $\mu$m or less, for example. The size of the particle is preferably 2 $\mu$m or more, more preferably 3 $\mu$m or more, further preferably 4 $\mu$m or more, and it is preferably 30 $\mu$m or less, further preferably 20 $\mu$m or less, further preferably 15 $\mu$m or less, further preferably 10 $\mu$m or less, in terms of median diameter, from the viewpoint of improving performance of the electrode and/or the battery. The median diameter can be measured by the above-described method.

The mixing can be performed by a conventional method, for example, in the same manner as the mixing in the above-described step (a-3). Moreover, when a raw-material metal compound is added to a raw material, it may also be mixed together.

In both the WET method and the DRY method, it is desirable to sufficiently mix raw materials in advance for baking.

The raw materials thus obtained may be used as they are in the next baking step, or if desired, they are formed into pellets, which can be then used in the next step.

[Baking step (2)]

The baking step is a step of baking the baking raw materials as obtained above. The baking can be performed by a conventional method, for example, by heating the baking raw materials at a predetermined temperature rising rate until reaching a predetermined temperature, maintaining them at the predetermined temperature for a predetermined time, and then cooling them naturally.

<<Non-oxidizing atmosphere>>

The baking is preferably performed under a non-oxidizing atmosphere. The non-oxidizing atmosphere refers to an atmosphere that does not substantially contain oxygen, and is adopted to suppress oxidative deterioration and excessive pyrolysis of constituent components. Specifically, it refers to an inert gas atmosphere such as nitrogen, argon, and the like, a sulfur gas atmosphere, an ammonia gas atmosphere, or the like. Thus, the baking can be appropriately performed, for example, in a quartz tube under an inert gas atmosphere.

<<Temperature rising rate>>

The temperature rising rate is preferably within a range of, for example, 50°C/h or higher and 500°C/h or lower. The temperature rising rate is preferably 80°C/h or higher, more preferably 100°C/h or higher, further preferably 120°C/h or higher. On the other hand, the temperature rising rate is more preferably 400°C/h or lower, further preferably 300°C/h or lower, further preferably 200°C/h or lower. When the temperature rising rate is within such ranges, there is a tendency to easily achieve the purpose of improving charge and discharge capacity and cycle characteristics.

<<Baking temperature/time>>

A baking temperature refers to a temperature after completion of a temperature rising of a raw material, the temperature being maintained for a certain period of time for baking the raw material. The temperature is preferably in a range of higher than 250°C and lower than 550°C. When it is higher than 250°C, there is a tendency to avoid insufficient sulfurization reaction and prevent a decrease in charge and discharge capacity of an object. On the other hand, when it is lower than 550°C, there is a tendency that decomposition of the raw material can be prevented and a decrease in yield and a decrease in charge and discharge capacity can be prevented. The temperature is more preferably higher than 300°C, further preferably higher than 350°C, further preferably 370°C or higher. On the other hand, it is more preferably lower than 500°C, further preferably lower than 450°C.

A baking temperature in the baking step is preferably higher than a temperature at which the raw-material metal compound pyrolyzes from the viewpoint of improving performance of the electrode and/or the battery.

A time for maintaining the baking temperature may be appropriately set according to types of raw materials, a baking temperature, etc., but is preferably 1 hour or more and 6 hours or less, for example. When it is 1 hour or more, there is a tendency that the baking can be sufficiently advanced, and when it is 6 hours or less, there is a tendency that excessive pyrolysis of the constituent components can be prevented.

<<Device>>

Baking can be performed by, for example, a muffle furnace (FIG. 1), or can be performed using a continuous device such as, for example, a twin-screw extruder and the like. When the continuous device is used, there is an advantage that the sulfur-based electrode active material can be continuously produced through a series of operations such as also performing baking while kneading, pulverizing, and mixing raw materials in the device, and the like.

The muffle furnace (FIG. 1) is a furnace partitioned by a hot plate or the like so that a heat source (heater) is not exposed inside the furnace in order to prevent contamination of a sample. In FIG. 1, the muffle furnace 1 has a heater 2 in the lower part of the furnace, the heater being partitioned by the hot plate. A lid 3 is installed on the front surface of the furnace (the left end side in the figure), which makes the furnace to have a structure in which the inside of the furnace can be held with an atmosphere of an inert gas 4. A thermocouple (not shown) is attached to the lid, so that a temperature inside the furnace during baking can be measured. Two tiers of trays 5 and 6 that are stainless steel rectangular parallelepiped reaction vessels for baking raw materials are installed on the upper tier and the lower tier, inside the furnace.

The inside of the furnace is configured so that gas (for example, an inert gas such as an argon (Ar) gas and the like) can be continuously supplied in from and discharged out to the outside through a gas introduction tube 7 and a gas discharge tube 8. The gas discharge tube 8 is connected to a trap tank 10 accommodating a sodium hydroxide aqueous solution 9, and an exhaust gas to exit from the muffle furnace 1 through the gas discharge tube 8 to the outside once passes through the sodium hydroxide aqueous solution 9 in the trap tank 10 and then is released to the outside. Therefore, even if the exhaust gas contains a hydrogen sulfide gas generated by reaction, the hydrogen sulfide gas is neutralized with the sodium hydroxide aqueous solution and removed from the exhaust gas.

[Step of removing residue]

In a processed product obtained after baking, unreacted sulfur and the like precipitated from sulfur sublimated during baking and then cooled may remain behind. It is desirable to remove these residues as much as possible because they may cause deterioration of cycle characteristics, if any. Removal of the residues can be performed according to a conventional method such as, for example, drying by heating under reduced pressure, drying with hot air, washing with a solvent, etc.

[Pulverization, classification]

It is preferable that the obtained electrode active material is pulverized to have a predetermined particle size and classified, in order to obtain a particle having a size suitable for producing an electrode. A preferred size range of the particle of the electrode active material is as described above.

The pulverization can be performed by a conventional method, for example, by subjecting the material to pulverization treatment under a predetermined condition using a pulverizer such as a cutter mill, a jet mill, and the like. A pulverization condition varies depending on a mill used, etc., but for example, when a cutter mill (e.g., Free Speed Mill FS-20 manufactured by Labonect) is used, the treatment can be performed at a rotation speed of 20,000 rpm or more and 30,000 rpm or less for 1 second or more and 30 seconds or less. Moreover, when a dry jet mill (e.g., Nano Jetmizer NJ-30 manufactured by Aishin Nano Technologies CO.,LTD) is used, the treatment can be performed at a processing speed of 1 g/min or more and 3 g/min or less with a pulverizing pressure of 0.5 MPa or more and 2.0 MPa or less. Moreover, the pulverization can be performed using a sieve, for example.

Besides, in the baking method using the twin-screw extruder as described above, at the same time with production of an electrode active material, pulverization of the produced electrode active material into particles can be also performed, by shearing during kneading.

(Production of electrode for lithium-ion secondary battery)

Using the electrode active material obtained above, an electrode for lithium-ion secondary battery comprising an electrode active material layer containing the electrode active material can be produced by a conventional method. That is, the electrode can be obtained in the same manner as in the case of producing a general electrode for lithium-ion secondary battery, except that the above-described electrode active material is used as an active material.

[Using electrode active material as positive electrode active material]

A positive electrode for lithium-ion secondary battery can be produced in the same manner as in the case for a general positive electrode for lithium-ion secondary battery, except that the above-described electrode active material is used as a positive electrode active material. For example, the positive electrode can be produced by mixing the electrode active material with a conductive aid, a binder, and a solvent to prepare a pasty positive electrode material, applying the positive electrode material to a current collector, and then drying it. As another method, the positive electrode can also be produced, for example, by kneading the electrode active material together with a conductive aid, a binder, and a small amount of solvent using a mortar or the like and forming them into a film, followed by crimping it to a current collector using a press machine or the like.

<<Conductive aid>>

Examples of the conductive aid include, for example, Vapor Grown Carbon Fiber (VGCF), carbon powder, carbon black (CB), acetylene black (AB), Ketjen black (KB), graphite, or a fine powder of metal that is stable at a positive electrode potential such as aluminum, titanium, and the like. Moreover, as the conductive aid, a conductive carbon material can also be used, among the above-described carbon materials. One or two or more kinds of these conductive aids can be used.

<<Binder>>

Examples of the binder include polyvinylidene fluoride (PolyVinylidene DiFluoride: PVDF), polytetrafluoroethylene (PTFE), a styrenebutadiene rubber (SBR), polyimide (PI), polyamide imide (PAI), carboxymethylcellulose (CMC), polyvinyl chloride (PVC), an acrylic resin, a methacrylic resin (PMA), polyacrylonitrile (PAN), a modified polyphenylene oxide (PPO), polyethylene oxide (PEO), polyethylene (PE), polypropylene (PP), and the like. One or more kinds of these binders can be used.

<<Solvent>>

Examples of the solvent include N-methyl-2-pyrrolidone, N,N-dimethylformaldehyde, alcohol, hexane, water, and the like. One or more kinds of these solvents can be used.

<<Compounding amount>>

A compounding amount of these materials constituting the positive electrode is not particularly limited, but, for example, 2 to 100 parts by mass of a conductive aid, 2 to 50 parts by mass of a binder, and an appropriate amount of a solvent are preferably compounded based on 100 parts by mass of the electrode active material.

<<Current collector>>

As the current collector, those generally used for a positive electrode for lithium-ion secondary battery may be used. For example, examples of the current collector include one composed of a metal foil such as an aluminum foil, an aluminum mesh, a punched aluminum sheet, an expanded aluminum sheet, a stainless steel foil, a stainless steel mesh, a punched stainless steel sheet, an expanded stainless steel sheet, a nickel foam, a nickel non-woven fabric, a copper foil, a copper mesh, a punched copper sheet, an expanded copper sheet, a titanium foil, a titanium mesh, and the like, as well as one composed of a carbon non-woven fabric, a carbon woven fabric, or the like. Among them, a current collector comprising a metal foil is preferable. The current collector may be used alone, or two or more thereof may be used in combination. In addition, the current collector may have its surface coated with carbon or the like. Specific examples of such a current collector having its surface coated with carbon or the like include, for example, a carbon-coated aluminum foil and the like. In this case, the current collector includes a carbon-coated portion.

[Using electrode active material as negative electrode active material]

The negative electrode for lithium-ion secondary battery can be produced in the same manner as in the case for a general negative electrode for lithium-ion secondary battery, except that the above-described electrode active material is used as a negative electrode active material. For example, the negative electrode can be produced by mixing the electrode active material with a conductive aid, a binder, and a solvent to prepare a pasty negative electrode material, applying the negative electrode material to a current collector, and then drying it. As another method, the negative electrode can also be produced, for example, by kneading the electrode active material together with a conductive aid, a binder, and a small amount of solvent using a mortar or the like and forming them into a film, followed by crimping it to a current collector using a press machine or the like.

As the conductive aid, binder, and solvent, the same ones as in the case of using the electrode active material as the positive electrode active material can be used, and the same can also be applied to the current collector.

(Production of lithium-ion secondary battery)

The lithium-ion secondary battery of the present embodiment can be produced in the same manner as in the case of producing a general lithium-ion secondary battery, except that the electrode for lithium-ion secondary battery obtained above is used.

[Using electrode active material as positive electrode active material]

The lithium-ion secondary battery of the present embodiment can be produced using a negative electrode and an electrolyte, and further, if desired, a member such as a separator and the like, in addition to a positive electrode comprising the above-described electrode active material (positive electrode active material), according to a conventional method.

<<Negative electrode>>

As the negative electrode material, a known metallic lithium, a carbon-based material such as graphite and the like, a silicon-based material such as a silicon thin film and the like, and an alloy-based material such as copper-tin, cobalt-tin, and the like can be used. When a lithium-free material, such as, for example, a carbon-based material, a silicon-based material, an alloy-based material, and the like, among the above-described negative electrode materials, is used as the negative electrode material, it is advantageous that a short circuit between the positive and negative electrodes due to generation of dendrites is unlikely to occur. However, when these lithium-free negative electrode materials are used in combination with the positive electrode of the present embodiment, neither the positive electrode nor the negative electrode contain lithium. For this reason, a lithium pre-doping process of inserting lithium into either or both of the negative electrode and the positive electrode in advance is required. As a method of pre-doping lithium, a known method may be followed. For example, when doping lithium into the negative electrode, there are a method of inserting lithium by an electrolytic doping method of assembling a half cell using metallic lithium as a counter electrode and electrochemically doping lithium and a method of inserting lithium by a pasting pre-doping method of attaching a metallic lithium foil to the electrode, then leaving it in an electrolytic solution, and doping it by utilizing diffusion of lithium into the electrode. Moreover, when pre-doping lithium into the positive electrode, the above-described electrolytic doping method can be used. As the lithium-free negative electrode materials, silicon-based materials that are negative electrode materials with a high capacity are particularly preferable, and among them, a thin-film silicon, which is thin in electrode thickness and thus is advantageous in terms of capacity per volume, is more preferable.

<<Electrolyte>>

The electrolyte compensates, with flowing ions, for electric charge generated by electrons being released to an external circuit along with oxidation/reduction of electrode active materials at the positive and negative electrodes. As the electrolyte used for the lithium-ion secondary battery, those obtained by dissolving an alkali metal salt that is an electrolyte in an organic solvent can be used. As the organic solvent, it is preferable to use at least one selected from non-aqueous solvents such as dimethoxyethane, ethylene carbonate, propylene carbonate, dimethyl carbonate, diethyl carbonate, ethyl methyl carbonate, dimethyl ether, $\gamma$-butyrolactone, acetonitrile, and the like. As the electrolyte, $Li(FSO_2)_2N$, $LiPF_6$, $LiBF_4$, $LiAsF_6$, $LiCF_3SO_3$, LiI, $LiClO_4$, and the like can be used. A concentration of the electrolyte has only to be about 0.5 mol/L to 5.0 mol/L. Besides, the electrolyte is not limited to one in a liquid state. For example, when the lithium-ion secondary battery is a lithium polymer secondary battery, the electrolyte is in a solid state (for example, a polymer gel state).

<<Separator>>

The lithium-ion secondary battery may comprise a member such as a separator and the like, in addition to the negative electrode, positive electrode, and electrolyte as mentioned above. The separator is interposed between the positive electrode and the negative electrode, permits ion migration between the positive electrode and the negative electrode, and prevents an internal short circuit between the positive electrode and the negative electrode. If the lithium-ion secondary battery is of a sealed type, the separator is required to have a function of retaining the electrolytic solution. As the separator, it is preferable to use a thin and microporous or non-woven fabric film made of polyethylene, polypropylene, polyacrylonitrile, aramid, polyimide, cellulose, glass, or the like.

<<Shape>>

A shape of the lithium-ion secondary battery is not particularly limited, and various shapes such as a cylindrical shape, a stacked shape, a coin shape, a laminate shape, a button shape, and the like can be used.

[Using electrode active material as negative electrode active material]

The lithium-ion secondary battery of the present embodiment can be produced using a positive electrode and an electrolyte, and further, if desired, a member such as a separator and the like, in addition to a negative electrode comprising the above-described electrode active material (negative electrode active material), according to a conventional method.

<<Positive electrode>>

The positive electrode material is not particularly limited as long as it is, for example, a transition metal oxide or solid solution oxide that contains lithium, or a substance capable of electrochemically absorbing and releasing lithium ions. Examples of the transition metal oxide that contain lithium include, for example, a Li-Co-based composite oxide such as $LiCoO_2$ and the like, a Li-Ni-Co-Mn-based composite oxide such as $LiNi_xCo_yMn_zO_2$ and the like, a Li-Ni-based composite oxide such as $LiNiO_2$ and the like, a Li-Mn-based composite oxide such as $LiMn_2O_4$ and the like, etc. Examples of the solid solution oxide include, for example, $Li_aMn_xCo_yNi_zO_2$ ($1.150 \leq a \leq 1.430$, $0.450 \leq x \leq 0.600$, $0.100 \leq y \leq 0.150$, $0.200 \leq z \leq 0.280$), $LiMn_xCo_yNi_zO_2$ ($0.300 \leq x \leq 0.850$, $0.100 \leq y \leq 0.300$, $0.100 \leq z \leq 0.300$), $LiMn_{1.5}Ni_{0.5}O_4$, and the like. These compounds may be used alone, or multiple kinds thereof may be mixed and used.

<<Others>>

As for shapes of the electrolyte, the separator, and the lithium-ion secondary battery, the same ones as in the case of using the electrode active material as the positive electrode active material can be used.

EXAMPLES

Although the present invention will be described based on Examples, it is not limited to Examples.

Various chemicals used in Examples and Comparative examples are collectively shown below. Various chemicals were purified according to a conventional method as necessary.

<Materials used in tests>

Organic compound: Spherical acrylic resin made of a homopolymer of methyl methacrylate (TECHPOLYMER MB-4 manufactured by Sekisui Kasei Co., Ltd., particle size: 4 μm)
Raw-material metal compound (Iron compound): Iron (II) oxalate dihydrate (iron (II) oxalate dihydrate manufactured by KANTO CHEMICAL CO., INC., guaranteed reagent)
Carbon material: Carbon nanotube (CNT) (CNT dispersant manufactured by Kusumoto Chemicals, Ltd., dispersion medium: N-methyl-2-pyrrolidone, average fiber diameter: 1.6 nm, average fiber length: 2 to 10 μm, specific surface area: 800 to 1600 $m^2$/g, G/D ratio: 40 or more, amount of metal impurities: 1% by mass or less)
Sulfur: Precipitated sulfur manufactured by Tsurumi Chemical Industry Co., Ltd.
Organic solvent (WET method): N-methyl-2-pyrrolidone (manufactured by YONEYAMA YAKUHIN KOGYO CO., LTD.)

Production example 1 (Fine pulverization of raw-material metal compound)

Before using a raw-material metal compound as a raw material, the raw-material metal compound was pulverized for 10 minutes in advance using a freezing pulverizer (JFC-2000 manufactured by Japan Analytical Industry Co., Ltd.).

Production example 2 (Preparation of dry mixture by WET method)

In Table 1, in the examples where a mixing method is indicated as WET, a dry mixture consisting of an organic compound, a raw-material metal compound, and a carbon material was prepared in advance by the WET method before preparing a baking raw material. In preparing the dry mixture, first, the organic compound was charged in an organic solvent and mixed thoroughly, and then the raw-material metal compound and the carbon material were further charged therein and mixed to obtain a liquid mixture. Next, the liquid mixture was removed of the organic solvent and pulverized using a cutter mill (LAB MILL manufactured by OSAKA CHEMICAL Co., Ltd.) to obtain a dry mixture.

<Production of electrode active material>

(Preparation of baking raw material)

In the examples where a dry mixture was prepared in advance by the WET method, the dry mixture was mixed with sulfur using a blender to obtain a raw material for baking. In the other examples (e.g., Reference example y, Reference example z), each raw material was mixed using a blender to prepare a raw material for baking.

(Reaction device)

A muffle furnace (FIG. 1) was used to bake a raw material. The muffle furnace in FIG. 1 is as described above.

(Baking step)

First, an atmosphere in a muffle furnace was replaced with an Ar gas three times using a vacuum pump with a baking raw material being contained in a tray that is a stainless steel reaction vessel. Then, while continuously supplying the Ar gas at a flow rate of 100 mL/min from a gas introduction tube, heating of the muffle furnace was initiated 30 minutes after the start of supply. The temperature was increased at a temperature rising rate of 5°C/min, and when the temperature of the baking raw material reached a baking temperature described in Table 1, heat treatment was performed for 2 hours while maintaining the temperature. Next, while adjusting the flow rate of the Ar gas, the temperature of the baked material was naturally cooled to 25°C under an Ar gas atmosphere, and then the baked material was taken out from the muffle furnace.

(Removal of unreacted sulfur)

In order to remove unreacted sulfur (sulfur alone in a free state) remaining in the product after the baking step, the following step was performed. That is, the baked material was pulverized in a mortar, and the pulverized product was placed in a glass tube oven and heated at 250°C for 3 hours while being vacuum-sucked to obtain an electrode active material in which unreacted sulfur was removed (or which comprises only a trace amount of unreacted sulfur). The temperature rising rate was set to 10°C/min.

(Pulverizing step)

The baked material from which unreacted sulfur was removed was pulverized with a cutter mill (free speed mill, FS-20, manufactured by Labonect).

(Classification work)

In order to remove coarse particles from the baked material after the pulverization, the baked material was classified using a 32 $\mu$m mesh stainless steel sieve to obtain an electrode active material.

<Physical property of electrode active material>

The electrode active material obtained above was examined for the following properties.

(Elemental analysis)

For amounts of elements of carbon, hydrogen, nitrogen, and sulfur, a mass ratio, in %, occupied in a total amount of electrode active materials was calculated from a mass measured using a vario MICRO cube, a fully automatic elemental analyzer, manufactured by Elementar. The results are shown in Table 1.

(Amounts of iron element)

Each electrode active material was subjected to thermogravimetry, and based on the measurement results obtained, an amount of an iron element, in % by mass, was calculated.
The thermogravimetry was performed using TGA Q500 manufactured by TA Instruments. A measurement condition was such that, after heating an electrode active material to 750°C under an Ar atmosphere, an atmospheric air was introduced to completely decompose a measurement sample. An ash content ratio, in % by mass, in each electrode active material was calculated from a measured weight reduction rate, in % by mass, using the following calculation.

Ash content ratio (% by mass) = 100 - weight reduction rate (% by mass)

Moreover, it was confirmed that an iron element in each electrode active material was present as iron disulfide ($FeS_2$), and therefore, an iron disulfide ratio, in % by mass, was calculated from an ash content ratio, in % by mass, of each electrode active material using the following calculation. That is, from the weight reduction rate (100% by mass) of Reference example y in Table 1, it can be seen that the organic compound is completely decomposed after being converted into a sulfide, while from the weight reduction rate (36% by mass) of Reference example z, it can be seen that the weight of iron disulfide ($FeS_2$) in the electrode active material is reduced by 36% by mass. Therefore, an iron disulfide ($FeS_2$) ratio, in % by mass, in each electrode active material was calculated by the following calculation.

$$FeS_2 \text{ ratio (\% by mass)} = \text{ash content ratio} \times \{100/(100-36)\}$$

Furthermore, an amount of an iron element (Fe ratio, % by mass) was calculated from the $FeS_2$ ratio, in % by mass, by the following calculation.

Fe ratio (% by mass) = $FeS_2$ ratio $\times$ Fe atomic weight / (Fe atomic weight + S atomic weight $\times$ 2)

(However, the Fe atomic weight of 55.845 and the S atomic weight of 32.065 were used.)

(Particle size distribution, median diameter)

A particle size distribution was measured with a laser diffraction/scattering type particle size distribution analyzer (particle size distribution analyzer PSA1090L manufactured by Anton Paar GmbH) using water as a dispersion medium to obtain a particle size distribution curve. From the particle size distribution curve, a volume basis cumulative 50% size (median diameter d50) was measured.

(Content of carbon material)

A content of a carbon material in the electrode active material was calculated from a ratio of a mass of the obtained electrode active material to a mass of the carbon material in the electrode active material. The mass of the carbon material in the electrode active material was calculated on the assumption that the carbon material was not subjected to reactions such as sulfurization, decomposition, and the like during baking and that the weight remained unchanged before and after baking.

The results are shown in Table 1 below.

Table 1

| | | | Production example | | | | | Reference example | |
|---|---|---|---|---|---|---|---|---|---|
| | | | A | B | C | D | a | y | z |
| Electrode active material | | | | | | | | | |
| Raw material | Compounding (parts by mass) | Organic compound | 100 | 100 | 100 | 100 | 100 | 100 | - |
| | | Raw-material metal compound | 100 | 100 | 100 | 100 | 100 | - | 100 |
| | | Carbon material | 0.10 | 0.28 | 0.46 | 4.60 | - | - | - |
| | | Sulfur | 600 | 600 | 600 | 600 | 600 | 300 | 300 |
| | Mixing method | | WET | WET | WET | WET | WET | - | - |
| Baking | | Baking temperature (°C) | 400 | 400 | 400 | 400 | 400 | 400 | 400 |
| Elemental analysis (%) | | C | 17.8 | 19.1 | 18.3 | 20.5 | 18.0 | 40.9 | 0.72 |
| | | H | 0.3 | 0.3 | 0.3 | 0.3 | 0.2 | 0.72 | 0.37 |
| | | N | 0.5 | 0.7 | 0.4 | 0.7 | 0.0 | 0.00 | 0.00 |
| | | S | 62.2 | 63.1 | 63.9 | 61.0 | 63.3 | 56.3 | 49.8 |
| Amount of iron element | | Weight reduction rate (% by mass) (a) | 67.5 | 71.1 | 70.6 | 72.9 | 71.0 | 100 | 36 |
| | | Ash content ratio (% by mass) (b) [b=100-a] | 32.5 | 28.9 | 29.5 | 27.1 | 29.0 | 0 | 64 |
| | | $FeS_2$ ratio (% by mass) (c) [c=b$\times$ 100/(100-36)] | 50.7 | 45.1 | 46.0 | 42.3 | 45.3 | 0 | 100 |
| | | Amount of iron element (% by mass) (d) [d=c$\times$Fe/(Fe+S$\times$2)] | 23.6 | 21.0 | 21.4 | 19.7 | 21.1 | 0 | 46.5 |
| Median diameter ($\mu$m) | | | 5.6 | 5.9 | 5.9 | 6.1 | 2.7 | - | - |
| Content of carbon material (% by mass) | | | 0.07 | 0.19 | 0.35 | 3.50 | 0 | - | - |

<Production of lithium-ion secondary battery>

A lithium-ion secondary battery was produced as follows.

(Positive electrode)

The electrode active material obtained above was used as an active material, acetylene black (HS-100 manufactured by Denka Company Limited) and a vapor-grown carbon fiber (VGCF manufactured by Showa Denko K.K.) were used as conductive aids, and an acrylic resin (manufactured by FUJIFILM Wako Pure Chemical Corporation, average molecular weight: 2700 to 7500) was used as a binder. They were weighed so that a proportion of the active material:acetylene black:the vapor-grown carbon fiber:binder became 95:1.25:1.25:2.5, in % by mass, put in a container, stirred and mixed with a planetary centrifugal mixer (ARE-250 manufactured by THINKY CORPORATION) using milliQ water for a dispersant to produce a uniform slurry. The slurry produced was applied onto a 17 $\mu$m aluminum foil using an applicator with a slit width of 100 $\mu$m, and compressed using a roll press to obtained an electrode, which was then heated at 120°C for 3 hours, dried with a dryer, and then punched to $\varphi$11 mm to obtain an electrode (positive electrode). Then, a mass of the electrode was measured to calculate an amount of an active material in the electrode from the above-mentioned ratio.

(Negative electrode)

As the negative electrode, a metallic lithium foil (disk-shaped with a diameter of 14 mm and a thickness of 500 $\mu$m, manufactured by Honjo Metal Co., Ltd.) was used. A stainless steel sheet was used as a negative electrode current collector.

(Electrolytic solution)

As the electrolyte, a nonaqueous electrolyte in which $LiPF_6$ was dissolved in a mixed solvent of ethylene carbonate and diethyl carbonate was used. Ethylene carbonate and diethyl carbonate were mixed at a volume ratio of 1:1. A concentration of $LiPF_6$ in the electrolyte was 1.0 mol/L.

(Lithium-ion secondary battery)

A coin battery was produced using the above-described positive electrode and negative electrode. In detail, in a dry room, a separator (Celgard 2400 manufactured by Celgard LLC, a polypropylene microporous membrane with a thickness of 25 $\mu$m) and a glass non-woven fabric filter (440 $\mu$m thickness, GA100 manufactured by ADVANTEC) were clamped between the positive electrode and the negative electrode to form an electrode body battery. This electrode body battery was accommodated in a battery case made of stainless steel (member for CR2032 type coin battery, manufactured by Hohsen Corp.). The above-described electrolyte was injected into the battery case. An amount of the electrolyte was 0.28 mL in terms of electrolyte volume. The battery case was sealed with a caulking machine to obtain a lithium-ion secondary battery in each of Examples and Comparative example.

<Evaluation on lithium-ion secondary battery>

(Discharge capacity and capacity retention rate)

Each coin-type lithium-ion secondary battery produced in Examples and Comparative example was charged and discharged at a current value corresponding to 50 mA per 1 g of a positive electrode active material, under a condition of a test temperature at 30°C. A discharge termination voltage was set to 1.0V, and a charge termination voltage was set to 3.0V. While charging and discharging were repeated, the first, the second, the third, and the tenth battery discharge capacities, in mAh, were observed. The measurement was performed using a battery performance evaluation device (BLS system manufactured by KEISOKUKI CENTER CO., LTD.).

The third discharge capacity $DC_3$, in mAh/g, was defined as an initial capacity. The larger the initial capacity is, the larger the charge and discharge capacity of the lithium-ion secondary battery is, which can be evaluated to be preferable. Moreover, a capacity retention rate, in %, was calculated from the third discharge capacity $DC_3$, in mAh/g, and the tenth discharge capacity $DC_{10}$, in mAh/g, according to the following equation. It can be said that the higher the capacity retention rate is, the more excellent the cycle characteristics of the lithium-ion secondary battery is.

$$\text{Capacity retention rate (\%)} = (DC_{10}/DC_3) \times 100$$

The results are shown in Table 2 below.

Table 2

| | | Example | | | | Comparative example |
|---|---|---|---|---|---|---|
| | | 1 | 2 | 3 | 4 | 1 |
| Active material | Production example | A | B | C | D | a |
| | Content of carbon material (% by mass) [$A_{CM}$] | 0.07 | 0.19 | 0.35 | 3.50 | 0 |
| Electrode | Application density (mg/cm$^2$) [D] | 3.95 | 3.85 | 3.07 | 3.01 | 3.05 |
| | Thickness of metal foil ($\mu$m) [T] | 17 | 17 | 17 | 17 | 17 |
| | $D \times A_{CM} \times 10$ [Inequality (1)] | 2.78 | 7.44 | 10.7 | 105 | 0 |
| | $D \times A_{CM}/T \times 10$ [Inequality (2)] | 0.163 | 0.438 | 0.630 | 6.20 | 0 |
| Battery | Volume of electrolyte (mL) [V] | 0.28 | 0.28 | 0.28 | 0.28 | 0.28 |
| | $D \times A_{CM}/V \times 10$ [Inequality (3)] | 9.92 | 26.6 | 38.2 | 376 | 0 |
| | Discharge capacity (mAh/g) First ($DC_1$) | 900 | 928 | 941 | 951 | 624 |
| | Second ($DC_2$) | 644 | 700 | 786 | 788 | 229 |
| | Third ($DC_3$) | 514 | 573 | 715 | 720 | 31 |
| | Tenth ($DC_{10}$) | 478 | 536 | 710 | 720 | 23 |
| | Capacity retention rate (%) ($DC_{10}/DC_3$) | 93 | 94 | 99 | 100 | 75 |

<Embodiments>

Preferred embodiments are shown below.

[1] An electrode active material of particles comprising:

an organic sulfur compound; and
a carbon material.

[2] The electrode active material of [1] above,

wherein the carbon material is a carbon fiber, and
wherein the carbon fiber comprises a fiber having an average fiber length of greater than 1 $\mu$m and an average fiber diameter of less than 100 nm, preferably less than 50 nm, more preferably less than 10 nm.

[3] The electrode active material of [2] above, wherein the carbon fiber comprises a carbon nanotube.
[4] The electrode active material of any one of [1] to [3] above, wherein a content of the carbon material in the electrode active material is less than 4.00% by mass, preferably less than 2.00% by mass, more preferably less than 1.00% by mass, further preferably less than 0.50% by mass, further preferably less than 0.40% by mass, further preferably 0.35% by mass or less.
[5] The electrode active material of any one of [1] to [4] above, further comprising a metal compound, the metal compound comprising at least one selected from the group consisting of iron, molybdenum, vanadium, and titanium.
[6] The electrode active material of [5] above, wherein the metal compound is an iron compound.
[7] An electrode comprising the electrode active material of any one of [1] to [6] above.
[8] The electrode of [7] above,

wherein the electrode comprises a current collector,
wherein the current collector comprises a metal foil, and
wherein $A_{CM}$ and D satisfy the following inequality, and the right side in the inequality (1) is preferably 1.50, more preferably 2.00, further preferably 2.50, further preferably 2.75, further preferably 5.00, further preferably 10.0, further preferably 50.0, further preferably 100,

$$(1)\ D \times A_{CM} \times 10 > 1.00$$

where $A_{CM}$ represents a content, in % by mass, of the carbon material in the electrode active material, and D represents an application density, in mg/cm$^2$, of the electrode active material to the current collector.

[9] The electrode of [7] or [8] above,

wherein the electrode comprises a current collector,
wherein the current collector comprises a metal foil, and
wherein $A_{CM}$, D, and T satisfy the following inequality, and the right side in the inequality (2) is preferably 0.120, more preferably 0.140, further preferably 0.160, further preferably 0.400, further preferably 0.600, further preferably 1.00, further preferably 3.00, further preferably 5.00, further preferably 6.00,

$$(2)\ D \times A_{CM}/T \times 10 > 0.100$$

where $A_{CM}$ represents a content, in % by mass, of the carbon material in the electrode active material, D represents an application density, in mg/cm$^2$, of the electrode active material to the current collector, and T represents a thickness, in $\mu$m, of the metal foil.

[10] The electrode of any one of [7] to [9] above,

wherein the electrode comprises a current collector,
wherein the current collector comprises a metal foil, and
wherein D is greater than 2.50 mg/cm$^2$, more preferably greater than 3.00 mg/cm$^2$, further preferably greater than 3.50 mg/cm$^2$, further preferably greater than 3.80 mg/cm$^2$, further preferably greater than 3.90 mg/cm$^2$, where D represents an application density, in mg/cm$^2$, of the electrode active material to the current collector.

[11] The electrode of any one of [7] to [10] above, wherein $DC_3$ is greater than 400 mAh/g, preferably greater than 450 mAh/g, more preferably greater than 500 mAh/g, further preferably 514 mAh/g or more, further preferably greater than 550 mAh/g, further preferably greater than 600 mAh/g, further preferably greater than 650 mAh/g, further preferably greater than 700 mAh/g, further preferably greater than 710 mAh/g, where $DC_3$ represents a third discharge capacity when the electrode is used as a positive electrode.

[12] The electrode of any one of [7] to [11] above, wherein $DC_{10}$ is greater than 350 mAh/g, preferably greater than 400 mAh/g, more preferably 478 mAh/g or more, further preferably greater than 500 mAh/g, further preferably 536 mAh/g or more, further preferably greater than 600 mAh/g, further preferably greater than 700 mAh/g, further preferably 710 mAh/g or more, where $DC_{10}$ represents a tenth discharge capacity when the electrode is used as a positive electrode.

[13] A lithium-ion secondary battery comprising the electrode of any one of [7] to [12] above.

[14] The lithium-ion secondary battery of [13] above, further comprising an electrolyte, wherein $A_{CM}$, D, and V satisfy the following inequality, and the right side in the inequality (3) is preferably 3.00, more preferably 5.00, further preferably 9.90, further preferably 20.0, further preferably 26.0, further preferably 30.0, further preferably 38.0, further preferably 100, further preferably 300, further preferably 370,

$$(3)\ D \times A_{CM}/V \times 10 > 1.00$$

where V represents a volume, in mL, of the electrolyte, $A_{CM}$ represents a content, in % by mass, of the carbon material in the electrode active material, and D represents an application density, in mg/cm$^2$, of the electrode active material to the current collector.

[15] A method of producing a lithium-ion secondary battery, the method comprising the steps of:

(1) mixing sulfur, an organic compound, and a carbon material to obtain a baking raw material;
(2) baking the baking raw material to obtain a baked material;
(3) pulverizing the baked material into particles to obtain an electrode active material;
(4) producing an electrode using the electrode active material; and
(5) producing a lithium-ion secondary battery using the electrode.

REFERENCE SIGNS LIST

1. Muffle furnace
2. Heater
3. Lid
4. Inert gas
5. Tray (Upper tier)
6. Tray (Lower tier)
7. Gas introduction tube
8. Gas discharge tube
9. Sodium hydroxide aqueous solution
10. Trap tank

**Claims**

1. An electrode active material of particles comprising:

   an organic sulfur compound; and
   a carbon material.

2. The electrode active material of claim 1,

   wherein the carbon material is a carbon fiber, and
   wherein the carbon fiber comprises a fiber having an average fiber length of greater than 1 $\mu$m and an average fiber diameter of less than 100 nm.

3. The electrode active material of claim 2, wherein the carbon fiber comprises a carbon nanotube.

4. The electrode active material of claim 1 or 2, wherein a content of the carbon material in the electrode active material is less than 4.00% by mass.

5. The electrode active material of claim 1 or 2, further comprising a metal compound, the metal compound comprising at least one selected from the group consisting of iron, molybdenum, vanadium, and titanium.

6. The electrode active material of claim 5, wherein the metal compound is an iron compound.

7. An electrode comprising the electrode active material of claim 1 or 2.

8. The electrode of claim 7,

   wherein the electrode comprises a current collector,
   wherein the current collector comprises a metal foil, and
   wherein $A_{CM}$ and D satisfy the following inequality,

$$(1)\ D \times A_{CM} \times 10 > 1.00$$

   where $A_{CM}$ represents a content, in % by mass, of the carbon material in the electrode active material and D represents an application density, in mg/cm$^2$, of the electrode active material to the current collector.

9. The electrode of claim 7,

   wherein the electrode comprises a current collector,
   wherein the current collector comprises a metal foil, and
   wherein $A_{CM}$, D, and T satisfy the following inequality,

$$(2)\ D \times A_{CM}/T \times 10 > 0.100$$

where $A_{CM}$ represents a content, in % by mass, of the carbon material in the electrode active material, D represents an application density, in $mg/cm^2$, of the electrode active material to the current collector, and T represents a thickness, in $\mu m$, of the metal foil.

**10.** The electrode of claim 7,

wherein the electrode comprises a current collector,
wherein the current collector comprises a metal foil, and
wherein D is greater than 2.50 $mg/cm^2$, where D represents an application density, in $mg/cm^2$, of the electrode active material to the current collector.

**11.** The electrode of claim 7, wherein $DC_3$ is greater than 400 mAh/g, where $DC_3$ represents a third discharge capacity when the electrode is used as a positive electrode.

**12.** The electrode of claim 7, wherein $DC_{10}$ is greater than 350 mAh/g, where $DC_{10}$ represents a tenth discharge capacity when the electrode is used as a positive electrode.

**13.** A lithium-ion secondary battery comprising the electrode of claim 7.

**14.** The lithium-ion secondary battery of claim 13, further comprising an electrolyte, wherein $A_{CM}$, D, and V satisfy the following inequality,

$$(3)\ D \times A_{CM}/V \times 10 > 1.00$$

where V represents a volume, in mL, of the electrolyte, $A_{CM}$ represents a content, in % by mass, of the carbon material in the electrode active material, and D represents an application density, in $mg/cm^2$, of the electrode active material to the current collector.

**15.** A method of producing a lithium-ion secondary battery, the method comprising the steps of:

(1) mixing sulfur, an organic compound, and a carbon material to obtain a baking raw material;
(2) baking the baking raw material to obtain a baked material;
(3) pulverizing the baked material into particles to obtain an electrode active material;
(4) producing an electrode using the electrode active material; and
(5) producing a lithium-ion secondary battery using the electrode.

# FIG. 1

## INTERNATIONAL SEARCH REPORT

| International application No. |
| --- |
| **PCT/JP2024/029923** |

### A. CLASSIFICATION OF SUBJECT MATTER

*H01M 4/137*(2010.01)i; *H01M 4/1397*(2010.01)i; *H01M 4/587*(2010.01)i; *H01M 4/62*(2006.01)i
FI:   H01M4/137; H01M4/587; H01M4/62 Z; H01M4/1397

According to International Patent Classification (IPC) or to both national classification and IPC

### B. FIELDS SEARCHED

Minimum documentation searched (classification system followed by classification symbols)

H01M4/137; H01M4/1397; H01M4/587; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2012-238448 A (SONY CORPORATION) 06 December 2012 (2012-12-06) claims 1, 4, 6 | 1-3, 7, 13 |
| A | | 4-6, 8-12, 14, 15 |
| A | JP 2022-158610 A (TOYOTA JIDOSHA KABUSHIKI KAISHA) 17 October 2022 (2022-10-17) entire text, all drawings | 1-15 |
| A | WO 2019/ 049826 A1 (NATIONAL UNIVERSITY CORPORATION YOKOHAMA NATIONAL UNIVERSITY) 14 March 2019 (2019-03-14) entire text, all drawings | 1-15 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 October 2024** | **05 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/029923** |

| Patent document cited in search report | | | Publication date (day/month/year) | Patent family member(s) | | | Publication date (day/month/year) |
| --- | --- | --- | --- | --- | --- | --- | --- |
| JP | 2012-238448 | A | 06 December 2012 | US | 2014/0052322 | A1 | |
| | | | | claims 1, 4, 6 | | | |
| | | | | CN | 103534842 | A | |
| JP | 2022-158610 | A | 17 October 2022 | US | 2022/0320492 | A1 | |
| | | | | entire text, all drawings | | | |
| WO | 2019/049826 | A1 | 14 March 2019 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020167144 A
- JP 2017088501 A